# EUROPÄISCHE PATENTSCHRIFT

(11) **EP 2 312 587 B1**
(45) Veröffentlichungstag und Bekanntmachung des Hinweises auf die Patenterteilung: **24.12.2014**
(21) Anmeldenummer: 10174998.4
(22) Anmeldetag: 02.09.2010
(51) Int. Cl.: G11B 33/12

(54) **Aufnahmeeinrichtung zur Aufnahme eines Datenspeichers, Datenspeicher sowie Verfahren zur Entnahme eines Datenspeichers aus der Aufnahmeeinrichtung und Verwendung eines elektronischen Schlüssels**
Holder device for holding a data storage medium, data storage medium and method for removing a data storage medium from the holder device and use of an electronic key
Dispositif de réception destiné à la réception d'une mémoire, mémoire et procédé pour l'extraction d'une mémoire du dispositif de réception de mémoire et utilisation d'une clé électronique

(30) Priorität: 19.10.2009 DE 102009045818
(43) Veröffentlichungstag der Anmeldung: 20.04.2011
(73) Patentinhaber: DResearch Digital Media Systems GmbH, 10319 Berlin (DE)
(72) Erfinder: Weber, Dr. Michael, 12683, Berlin (DE)
(74) Vertreter: Gulde & Partner

(56) Entgegenhaltungen:
- US-A- 4 833 554
- US-A- 5 126 890
- US-A- 5 825 616
- US-A1- 2007 177 346
- US-A1- 2008 089 022

## Beschreibung

Die vorliegende Erfindung betrifft eine Aufnahmeeinrichtung zur Aufnahme eines Datenspeichers, welche eine Verriegelungseinrichtung zur Fixierung des Datenspeichers an oder in der Aufnahmeeinrichtung und eine Freigabeeinrichtung aufweist, mittels derer die Fixierungswirkung der Verriegelungseinrichtung aufhebbar ist und somit der Datenspeicher zur Entnahme freigebbar ist. Des Weiteren betrifft die vorliegende Erfindung einen in der erfindungsgemäßen Aufnahmeeinrichtung aufnehmbaren Datenspeicher mit einem Speichermedium und einem das Speichermedium zumindest teilweise umgebenden Gehäuse, welches in der Aufnahmeeinrichtung aufgenommen und mittels der Verriegelungseinrichtung fixiert werden kann, wobei der Datenspeicher wenigstens ein Verriegelungselement aufweist, welches mit der Verriegelungseinrichtung der Aufnahmeeinrichtung form- und/oder kraftschlüssig zwecks Fixierung des Datenspeichers zusammenwirkt. Außerdem ist von der Erfindung ein Verfahren zur Entnahme des in oder an der Aufnahmeeinrichtung fixierten Datenspeichers aus der Aufnahmeeinrichtung umfasst.

Ergänzt wird die vorliegende Erfindung durch die Verwendung eines elektronischen Schlüssels zur Entriegelung eines Datenspeichers in oder an der Aufnahmeeinrichtung.

Elektronische Datenaufzeichnungssysteme nutzen häufig Datenspeicher, die relativ flexibel ausgewechselt werden können. In den Datenspeichern lassen sich, bevorzugt digitalisiert, Daten aufzeichnen, die bei Abruf entsprechende Informationen bereitstellen. Derartige Daten können z. B. Video- oder Audiodateien bilden. Die entsprechenden Daten oder Signale lassen sich z. B. in Aufzeichnungssystemen auf dem Datenspeicher speichern, sodass nach anschließender Entnahme des Datenspeichers aus dem Aufzeichnungssystem der Datenspeicher einer Auswerteeinheit, die eine Aufnahmeeinrichtung zur Aufnahme des Datenspeichers aufweist, zugeführt werden kann und dort die entsprechenden Daten oder Informationen ausgelesen werden können. Das heißt, dass zur Benutzung des Datenspeichers dieser zunächst in einem Aufzeichnungsgerät, welches ebenfalls eine Aufnahmeeinrichtung zur Aufnahme des Datenspeichers bereithalten muss, aufgenommen wird, und gegebenenfalls zur Auswertung einer zweiten Aufnahmeeinrichtung zugeführt wird. Alternativ kann die Benutzung des Datenspeichers auch derart ausgeführt sein, dass Aufnahme und Auswertung der gespeicherten Daten in nur einer Aufnahmeeinrichtung erfolgen. Aufnahmeeinrichtungen und Datenspeicher lassen sich insbesondere zur Überwachung bzw. Kontrolle von räumlichen Einrichtungen wie z. B. auch öffentlichen Verkehrsmitteln nutzen, wobei der Datenspeicher in eine Aufzeichnungseinheit im öffentlichen Verkehrsmittel aufgenommen wird, dort entsprechende Videosignale, die in dem öffentlichen Verkehrsmittel aufgenommen wurden, gespeichert werden und anschließend der Datenspeicher zur Auswertung der Videosignale der Aufzeichnungseinheit entnommen wird und einer Auswerteeinheit zugeführt wird. Die Aufnahmeeinheit und die Auswerteeinheit müssen dabei beide jeweils eine Aufnahmeeinrichtung zur Aufnahme des Datenspeichers aufweisen.

Derartige Aufzeichnungssysteme, insbesondere in öffentlich zugängigen Bereichen, werden üblicherweise durch ein mechanisches Schloss gesichert, sodass der Datenspeicher nicht durch unbefugte Personen entnommen werden kann. Häufig ist dabei das mechanische Schloss mit einem Schalter kombiniert, sodass bei der mechanischen Öffnung des Schlosses dem Aufzeichnungssystem signalisiert wird, dass der Datenspeicher entnommen werden soll. Die Aufzeichnungseinheit kann so dann den Betrieb des Datenspeichers herunterfahren und diesen somit in einen Zustand versetzen, der eine Entnahme des Datenspeichers ohne dessen Beschädigung oder Datenverlust gewährleistet.

Dies birgt allerdings den Nachteil, dass nach mechanischer Öffnung des Schlosses durch den dazugehörigen Schlüssel der Datenspeicher sich bereits in einem unfixierten Zustand befindet, sodass unabhängig vom Betriebszustand des Datenspeichers dieser von einer Bedienperson entnommen werden kann, wodurch es gegebenenfalls zu Beschädigungen des Datenspeichers und/oder auch zu Datenverlusten bzw. zu Beeinträchtigungen oder Beschädigungen des Aufzeichnungssystems kommen kann.

Durch die Verwendung eines mechanischen Schlosses ergibt sich zudem das Problem der Rechte zur Entnahme des Datenspeichers dahingehend, dass entweder mehrere Aufzeichnungssysteme mit ein und demselben Schlüssel geöffnet werden können, wodurch entweder der Besitzer eines einzigen Schlüssels ausschließliche Rechte hat zur Entnahme des Datenspeichers und sich daraus logistische Probleme ergeben können, da sich die Aufzeichnungssysteme, wenn sie z. B. in öffentlichen Verkehrsmitteln montiert sind, an sehr unterschiedlichen geografischen Position befinden können. Bei Vergabe einer Vielzahl von Schlüsseln zur Entnahme der Datenspeicher ergibt sich wiederum das Problem der dadurch legitimierten Vielzahl von Personen, denen die Entnahme eines Datenspeichers möglich ist. Das heißt, dass der Personenkreis, der zur Entnahme der Datenspeicher berechtigt ist, entweder außerordentlich klein oder außerordentlich groß sein muss.

Aus US 2008/089022 A1 ist eine Aufnahmeeinrichtung zur Aufnahme eines Datenspeichers bekannt. Die Aufnahmeeinrichtung umfasst eine Verriegelungseinrichtung zur Fixierung des Datenspeichers und eine Freigabeeinrichtung, mittels derer die Fixierungswirkung der Verriegelungsrichtung aufhebbar ist und somit der Datenspeicher zur Entnahme freigebbar ist. Die Freigabe erfolgt durch einen mechanisch betätigbaren Betätigungsknopf.

Der vorliegenden Erfindung liegt somit die Aufgabe zugrunde, eine Aufnahmeeinheit zur Aufnahme eines Datenspeichers sowie den Datenspeicher selbst zur Verfügung zu stellen, die mit geringem konstruktiven Aufwand eine einfache und gefahrlose Entnahme eines Datenspeichers aus einer Aufnahmeeinheit einem bestimmten, mit strukturierten Rechten versehenen, Personenkreis ermöglicht.

Diese Aufgabe wird durch die erfindungsgemäße Aufnahmeeinrichtung nach Anspruch 1 und durch das erfindungsgemäße Verfahren zur Entnahme eines Datenspeichers aus der Aufnahmeeinrichtung nach Anspruch 7 gelöst.

Vorteilhafte Ausgestaltungen der Aufnahmeeinrichtung sind in den Unteransprüchen 2 - 6 dargestellt.

Erfindungsgemäß wird eine Aufnahmeeinrichtung zur Aufnahme eines Datenspeichers zur Verfügung gestellt, wobei die Aufnahmeeinrichtung eine Verriegelungseinrichtung zur Fixierung des Datenspeichers an oder in der Aufnahmeeinrichtung und eine Freigabeeinrichtung, mittels derer die Fixierungswirkung der Verriegelungseinrichtung aufhebbar ist und somit der Datenspeicher zur Entnahme freigebbar ist, umfasst. Erfindungsgemäß ist vorgesehen, dass die Freigabeeinrichtung durch wenigstens einen elektronischen Schlüssel aktivierbar ist. Der elektronische Schlüssel ist Träger eines Codes, der von der Freigabeeinrichtung auslesbar. Er weist einen Elektro-Energiespeicher auf, so dass die elektrische Energie zur Entriegelung des Verriegelungsmechanismus durch den elektronischen Schlüssel bereitgestellt ist. Die Aufnahmeeinrichtung umfasst eine Steuerungseinrichtung, mittels derer die Freigabe des Datenspeichers nach Auslesung eines im elektronischen Schlüssel gespeicherten Codes steuerbar ist. Die Aufnahmeeinrichtung ist derart ausgestaltet, dass sie bei Erhalt des Signals zur Entriegelung vom elektronischen Schlüssel während des Betriebes des Datenspeichers zunächst den Zugriff auf den Datenspeicher beendet und danach den Datenspeicher entriegelt.

Der Code ist vorteilhafterweise mit einem sogenannten Krypto-Verfahren verschlüsselt. Die Freigabeeinrichtung bildet somit eine Schnittstelle zur Aufnahme des elektrischen Schlüssels zwecks Auswertung der auf dem elektrischen Schlüssel gespeicherten Informationen. Zum Datenaustausch mit dem Datenspeicher hat die Aufnahmeeinrichtung ebenfalls eine Schnittstelle, über die der Datenspeicher mit der Aufnahmeeinrichtung kommunizieren kann.

Vorteilhafterweise ist vorgesehen, dass die Aufnahmeeinrichtung ein Betätigungselement aufweist, welches mittels Beaufschlagung mit einer von einem Formelement am Datenspeicher bewirkten mechanischen Kraft betätigbar oder betätigt ist, wobei die Aufnahmeeinrichtung derart ausgestaltet ist, dass eine Kommunikation zwischen dem Datenspeicher und der Aufnahmeeinrichtung nur möglich ist, wenn das Betätigungselement betätigt ist. Das heißt, dass die Verriegelungseinrichtung z. B. ein Formelement am Datenspeicher hintergreifen kann und somit den Datenspeicher fixieren kann. Der Betrieb des Datenspeichers ist nur so lange möglich, wie die Verriegelungseinrichtung im Eingriff mit dem Formelement ist. Bei Erhalt des Signals zur Freigabe des Datenspeichers wird eine Lösung der Verriegelungseinrichtung vom Formelement realisiert, sodass der Datenspeicher mechanisch freigegeben wird.

Die Aufnahmeeinrichtung kann dabei den elektronischen Schlüssel selbst umfassen, wobei der elektronische Schlüssel einen Elektro-Energiespeicher aufweisen kann, sodass die elektrische Energie zur Entriegelung des Verriegelungsmechanismus durch den elektronischen Schlüssel bereitgestellt ist. Das heißt, dass in Abweichung von einer möglichen konstruktiven Ausführung, bei der die elektrische Energie zur Freigabe des Datenspeichers durch die Aufnahmeeinrichtung bzw. durch den mit der Aufnahmeeinrichtung verbundenen Energiespeicher bereitgestellt wird, in dieser Ausführung die Energie vom elektronischen Schlüssel selbst zur Verfügung gestellt wird.

Für die bevorzugte Ausgestaltung ist die erfindungsgemäße Aufnahmeeinrichtung derart konzipiert, dass sie bei Erhalt des Signals zur Entriegelung vom elektronischen Schlüssel während des Betriebs des Datenspeichers zunächst den Zugriff auf den Datenspeicher beendet und danach den Datenspeicher entriegelt. Das heißt, dass zuerst die Kommunikation mit dem Datenspeicher beendet wird und dessen Betrieb heruntergefahren wird und danach erst der Datenspeicher mechanisch freigegeben wird, sodass er aus der Aufnahmeeinrichtung entnommen werden kann.

Zwecks Signalisierung der Entnehmbarkeit sowie der Erleichterung des Greifens des Datenspeichers an oder in der Aufnahmeeinrichtung kann vorgesehen sein, dass die Aufnahmeeinrichtung derart ausgestaltet ist, dass sie nach Entriegelung des Datenspeichers diesen wenigstens einen Weg von 5-20 mm bewegt. Das heißt, dass die Aufnahmeeinrichtung nach Entriegelung des Datenspeichers diesen einen gewissen Weg hervorschiebt, so dass einem Bediener klar erkennbar ist, dass der Datenspeicher freigegeben ist und er diesen Datenspeicher einfach greifen und aus der Aufnahmeeinrichtung vollständig herausziehen kann.

Die Aufnahmeeinrichtung sollte dabei eine Anzeige aufweisen, auf der wenigstens der Zustand der Entnahmebereitschaft des Datenspeichers aus der Aufnahmeeinrichtung erkennbar ist. Das heißt, dass zusätzlich oder alternativ zum Herausschieben des Datenspeichers nach Entriegelung auf einer Anzeige erkennbar ist, ob der Datenspeicher herausnehmbar ist oder nicht. Diese Anzeige kann z. B. durch unterschiedlich farbige LED gebildet sein, wobei eine jede Farbe den Zustand der Entnahmebereitschaft des Datenspeichers signalisieren kann. Die Anzeige kann dabei zusätzlich derart ausgestattet sein, dass sie Informationen hinsichtlich des Verriegelungszustandes und/oder des Betriebes des Datenspeichers und/oder der Berechtigung der jeweiligen Bedienperson in Abhängigkeit vom elektronischen Schlüssel und/oder der Rechte auf den Zugriff auf den Datenspeicher signalisiert. Die Anzeige kann dabei auf einer Leiterkarte zusammen mit der Schnittstelle zur Anlage des elektronischen Schlüssels angeordnet sein.

Die Freigabeeinrichtung kann dabei derart ausgestaltet sein, dass sie durch mehrere, gegebenenfalls unterschiedliche Signale aufweisende elektronische Schlüssel betätigt werden kann. Der Vorteil dieser Ausgestaltung liegt in der Strukturierung der Schlüsselrechte in sogenannte General- und Unterschlüssel. Das heißt, dass eine elektronische Selektion der Berechtigung stattfindet.

Vorteilhafterweise umfasst die Aufnahmeeinrichtung wenigstens eine Steuerungseinrichtung, mittels derer die Freigabe des Datenspeichers nach Auslesung eines im elektronischen Schlüssel gespeicherten Codes steuerbar ist. Außerdem dient die Steuerung zur Strukturierung der Rechte an dem Datenspeicher, wie z. B. das Recht zur Konfiguration des Datenspeichers und/oder das Recht hinsichtlich der Menge und Art der Auslesung der im Datenspeicher gespeicherten Informationen und/oder das Recht, mit welchen Datenspeicher überhaupt kommuniziert werden darf. Durch die Anordnung bzw. Verwendung unterschiedlicher elektronischer Schlüssel sowie entsprechender Steuerungseinrichtungen lassen sich somit Rechte derart strukturiert vergeben, dass unterschiedlichen Bedienpersonen der Zugang zu unterschiedlichen Datenspeichern bzw. Aufnahmeeinrichtungen ermöglicht wird und diesen Personen auch unterschiedliche Rechte hinsichtlich der Auslesung der Daten und Konfiguration der Datenspeicher gegeben werden.

Die Erfindung umfasst außerdem ein Datenspeichersystem, welches eine erfindungsgemäße Aufnahmeeinrichtung und wenigstens einen in oder an der Aufnahmeeinrichtung angeordneten Datenspeicher aufweist, der in oder an der Aufnahmeeinrichtung mittels der Verriegelungseinrichtung fixiert ist. Wie bereits erklärt, ist erst in diesem Zustand der Aufnahme des Datenspeichers und seiner Fixierung der Datenaustausch zwischen Datenspeicher und Aufnahmeeinrichtung möglich.

Zur Lösung der Aufgabe wird außerdem ein Verfahren zur Entnahme eines in oder an der erfindungsgemäßen Aufnahmeeinrichtung fixierten erfindungsgemäßen Datenspeichers zur Verfügung gestellt, wobei zur Aktivierung einer Lösung der Fixierung des Datenspeichers in oder an der Aufnahmeeinrichtung der Code eines elektronischen Schlüssels ausgelesen wird und bei Übereinstimmung mit einer in der Aufnahmeeinrichtung gespeicherten Information der Datenspeicher zur Entnahme freigegeben wird.

Vorteilhafterweise erfolgt die Freigabe des Datenspeichers erst dann, wenn der Betrieb des Datenspeichers beendet ist.

Im Einzelnen läuft das Verfahren zur Entnahme des Datenspeichers wie folgt ab: Eine Bedienperson verbindet den elektronischen Schlüssel mit der Schnittstelle der Freigabeeinrichtung, sodass die Freigabeeinrichtung den im elektronischen Schlüssel gespeicherten Code mit einer dazugehörigen Information vergleichen kann. Bei Übereinstimmung des Codes mit der gespeicherten Information wird der Betriebszustand des Datenspeichers erfasst. Bei Betrieb des Datenspeichers wird dieser beendet und ein entsprechendes Signal zur mechanischen Freigabe des Datenspeichers erzeugt. Daraufhin wird der Datenspeicher mechanisch freigegeben und ein Signal auf der Anzeige erzeugt, dass der Datenspeicher freigegeben wurde.

Die Erfindung ergänzend wird außerdem die Verwendung eines elektronischen Schlüssels zur Entriegelung eines Datenspeichers in oder an einer Aufnahmeeinrichtung zur Verfügung gestellt, wobei als Datenspeicher insbesondere ein erfindungsgemäßer Datenspeicher und als Aufnahmeeinrichtung insbesondere eine erfindungsgemäße Aufnahmeeinrichtung verwendet wird.

Die Erfindung soll im Folgenden anhand der beiliegenden Zeichnungen erläutert werden.

Es zeigt dabei
Figur 1 eine Aufnahmeeinrichtung 10 mit an ihr fixiertem Datenspeicher 20 in perspektivischer Ansicht,
Figur 2 die Aufnahmeeinrichtung 10 ohne Datenspeicher in perspektivischer Ansicht,
Figur 3 einen Ausschnitt aus der Verbindungsstelle zwischen Aufnahmeeinrichtung 10 und Datenspeicher 20,
Figur 4 einen Datenspeicher 20 in Ansicht von vorne.

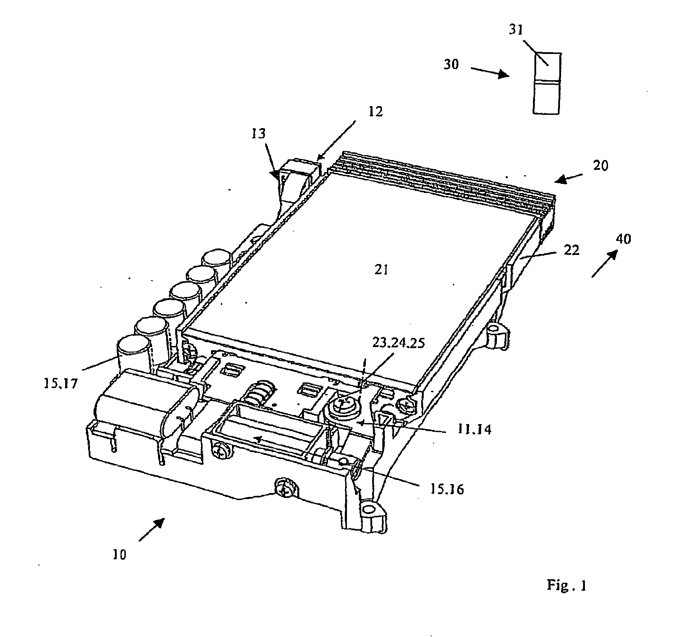

Aus Figur 1 ist ersichtlich, dass der Datenspeicher 20 ein Gehäuse 22 umfasst, in dem ein Speichermedium 21, z. B. in Form einer Festplatte, angeordnet ist. Mittels einer Verriegelungseinrichtung 14 in Form eines schwenkbaren Riegels wird der Datenspeicher 20 an der Aufnahmeeinrichtung 10 fixiert. Die Verriegelungseinrichtung 14 hintergreift dabei ein Verriegelungselement 23 am Datenspeicher 20. Das Verriegelungselement 23 stellt dabei gleichzeitig eine Sollbruchstelle 24 dar. Das heißt, dass bei gewaltsamer Entfernung des Datenspeichers 20 von der Aufnahmeeinrichtung 10 das Verriegelungselement 23 an seiner Sollbruchstelle 24 zerstört wird, sodass die gewaltsame Entnahme an einem herausgenommenem Datenspeicher 20 optisch wahrnehmbar ist.

Neben der Fixierungsfunktion dient die Verriegelungseinrichtung 14 gleichzeitig als Betätigungselement 11, und das Verriegelungselement 23 am Datenspeicher 20 dient gleichzeitig als Formelement 25 zur Betätigung des Betätigungselementes 11 an der Aufnahmeeinrichtung 10. Das Verriegelungselement 23, die Sollbruchstelle 24 und das Formelement 25 können wie dargestellt ein Teil wie z. B. ein Stift sein, der in der Figur mit der gestrichelten Linie angedeutet ist. Das Formelement 25 dient zur Betätigung des Betätigungselementes 11, welches an der Verriegelungseinrichtung 14 angeordnet ist bzw. durch die Verriegelungseinrichtung 14 selbst dargestellt ist. Die Verriegelungseinrichtung 14 ist wie in der Figur gezeigt durch dasselbe Teil in Form eines Schwenkriegels realisiert, der mit einem geeigneten Sperrmechanismus zusammenwirkt. Das heißt, dass der Betrieb des Datenspeichers 20 erst ermöglicht wird, wenn das Formelement 25 bzw. das Verriegelungselement 23 das Betätigungselement 11 bzw. die Verriegelungseinrichtung 14 betätigt. Dies hat den Vorteil, dass nur ein unversehrtes Verriegelungselement 23 in seiner Funktion als Formelement 25 die Verriegelungseinrichtung 14 in ihrer Funktion als Betätigungselement 11 betätigen kann und somit den Betrieb des Datenspeichers 20 zulassen kann. Daraus folgt, dass ein gebrochenes Verriegelungselement 23 nicht mehr ein Formelement 25 zur Verfügung stellt, welches das Betätigungselement 11 betätigen kann und somit bei einem gewaltsam entnommenem Datenspeicher und damit verbundenen Bruch des Verriegelungselementes 23 kein Betrieb des Datenspeichers 20 möglich ist.

Dabei müssen nicht unbedingt wie in der Figur 1 dargestellt das Verriegelungselement 23 gleichzeitig als Formelement 25 und die Verriegelungseinrichtung 14 gleichzeitig als Betätigungselement 11 ausgestaltet sein, sondern es kann sich beim Betätigungselement 11 und Verriegelungseinrichtung 14 um jeweils getrennte Bauteile sowie auch beim Verriegelungselement 23 und dem Formelement 25 um getrennte Bauelemente handeln.

Zur Entnahme des Datenspeichers 20 aus der Aufnahmeeinrichtung 10 wird ein elektronischer Schlüssel 30 mit einer Schnittstelle 12 an der Aufnahmeeinrichtung 10 verbunden, zum Beispiel durch Aufstecken, so dass der im elektronischen Schlüssel 30 gespeicherte Code durch die Schnittstelle 12 auslesbar ist. Die Schnittstelle 12 ist dabei Bestandteil der Freigabeeinrichtung 15 der Aufnahmeeinrichtung 10. Bei Übereinstimmung des Codes des elektronischen Schlüssels 30 mit einer in der Freigabeeinrichtung 15 gespeicherten Information verursacht die Freigabeeinrichtung 15 die mechanische Freigabe des Datenspeichers 20, allerdings erst nachdem der Betrieb des Datenspeichers 20 eingestellt wurde. Dies hat den Vorteil, dass der Datenspeicher nur dann entnommen werden kann, wenn keine Kommunikation mehr zwischen ihm und der Aufnahmeeinrichtung 10 stattfindet. Eine Beschädigung des Datenspeichers 20, der Aufnahmeeinrichtung 10 sowie etwaiger Datenverlust werden dadurch vermieden.

Die Energie zur Bewegung der Verriegelungseinrichtung 14 zwecks Freigabe des Datenspeichers 20 wird dabei Kondensatoren 17 entnommen, welche die erforderliche Energie zwischenspeichern. Diese elektrische Energie wird einem Elektromagnet 16 zugeführt, der bei Bestromung eine Bewegung ausführt, die über ein geeignetes Getriebe auf die Verriegelungseinrichtung 14 übersetzt wird, sodass diese sich derart bewegt, dass der Datenspeicher 20 mechanisch freigegeben ist. Bevor der Datenspeicher entnehmbar ist, wird der Betrieb des Datenspeichers 20 beendet, das heißt, dass die Aufnahmeeinrichtung stromlos geschaltet wird, z. B. dadurch, dass ein geeignetes "Ende-Kommando" an das Speichermedium 21 gesendet wird und das Speichermedium nach Ausführung dieses "Ende-Kommandos" stromlos geschaltet wird und der Datenspeicher somit schadlos entnommen werden kann.

Nachdem der Datenspeicher 20 stromlos geschaltet und freigegeben wurde kann er durch eine geeignete Einrichtung zur Erzeugung eines Auswurfs des Datenspeichers 20 in Bewegungsrichtung 40 eine bestimmte Distanz vorgeschoben werden, so dass einer Bedienperson ersichtlich ist, dass der Datenspeicher 20 tatsächlich mechanisch freigegeben ist und außerdem die Entnahme des Datenspeichers 20 der Bedienperson erleichtert wird. Neben dieser Auswurfbewegung kann der Bedienperson auch durch eine Anzeige 13 an der Freigabeeinrichtung 15 angezeigt werden, ob sich der Datenspeicher 20 im entnahmebereiten Zustand befindet. Die Anzeige 13 kann dabei ein integraler Bestandteil der Schnittstelle 12 zur Anlage des elektronischen Schlüssels 30 sein.

Die Aufnahmeeinrichtung 10 ist zur Versorgung mit elektrischer Energie mit einer geeigneten Spannungsquelle zu verbinden.
In alternativer Ausführungsform kann vorgesehen sein, dass der elektronische Schlüssel 30 einen Elektro-Energiespeicher 31 umfasst, durch den die elektrische Energie zum Betrieb der Aufnahmeeinrichtung zum Zweck der Freigabe und gegebenenfalls des Auswurfs des Datenspeichers 20 zur Verfügung gestellt wird.

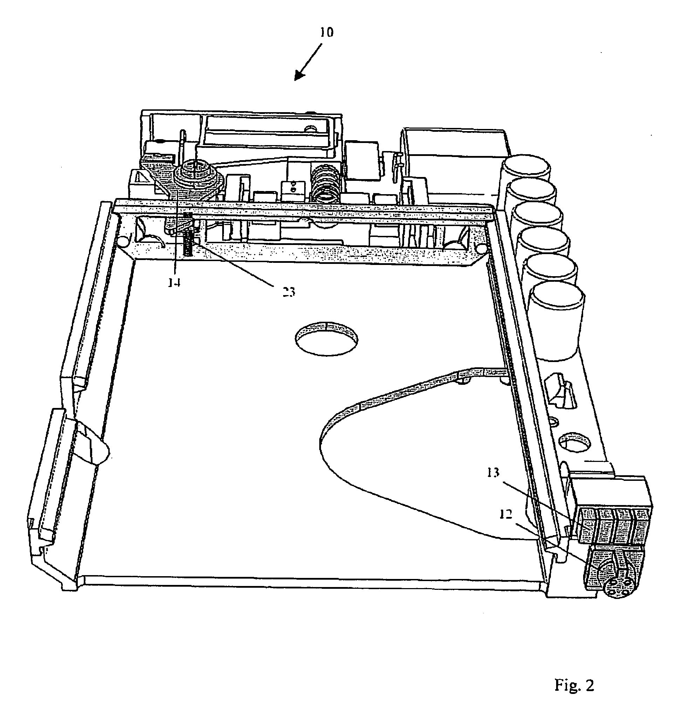

In Figur 2 ist die Aufnahmeeinrichtung 10 ohne den Datenspeicher 20 in einer Ansicht von einer rückwärtigen Seite dargestellt, wobei deutlich das Hintergreifen des stiftförmigen Verriegelungselementes 23 durch die hakenförmige Verriegelungseinrichtung 14 ersichtlich ist. Dabei ist das Verriegelungselement 23 ein Teil des in Figur 2 nicht dargestellten Datenspeichers, so dass die in Figur 2 dargestellte Situation des Hintergreifens des Verriegelungselementes 23 durch die Verriegelungseinrichtung 14 in Abwesenheit des Datenspeichers 20 nur stattfinden kann, wenn der Datenspeicher 20 unerlaubt von der Aufnahmeeinrichtung 10 entfernt wurde und somit an seinen Sollbruchstellen 24 aus dem Datenspeicher 20 herausgebrochen wurde.

Ebenfalls deutlich ersichtlich ist aus Figur 2 die Anordnung der Schnittstelle 12 sowie der Anzeige 13, wobei die Erfindung nicht auf die in Figur 2 dargestellten Positionen der Schnittstelle 12 und der Anzeige 13 festgelegt ist, sondern die Schnittstelle 12 und die Anzeige 13 auch an anderen, im Wesentlichen frei zugänglichen Bereichen der Aufnahmeeinrichtung 10 angeordnet sein können.

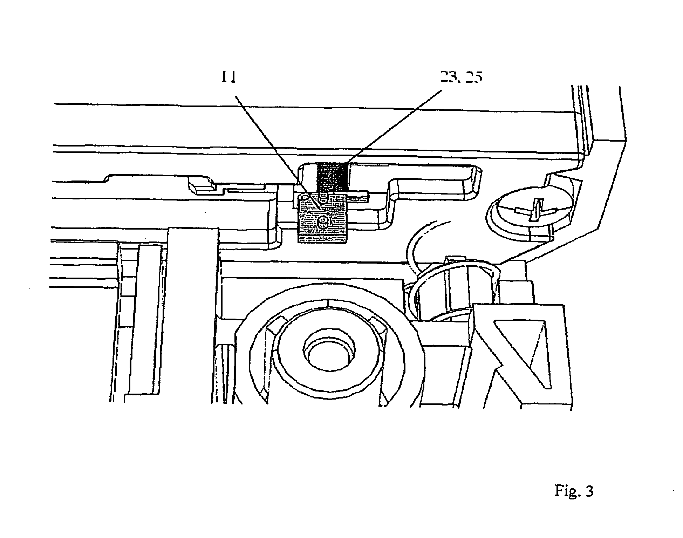

Aus Figur 3 wird die Zusammenwirkung des Formelementes 25, welches gleichzeitig das stiftförmige Verriegelungselement 23 ist, mit dem Betätigungselement 11 ersichtlich. Nur dann, wenn das Formelement 25 im Bezug zum Betätigungselement 11 in einer bestimmten Weise positioniert ist, ist der mit dem Formelement 25 verbundene Datenspeicher 20 in der Aufnahmeeinrichtung 10 aktivierbar. Das heißt, dass bei einem nicht vorhandenen Formelement 25 das Betätigungselement 11 nicht betätigt wird und somit bei Beschädigung des Datenspeichers 20 an seinem Formelement 25 der Datenspeicher nicht durch unberechtigte Personen in einer Aufnahmeinrichtung 10 betrieben werden kann.

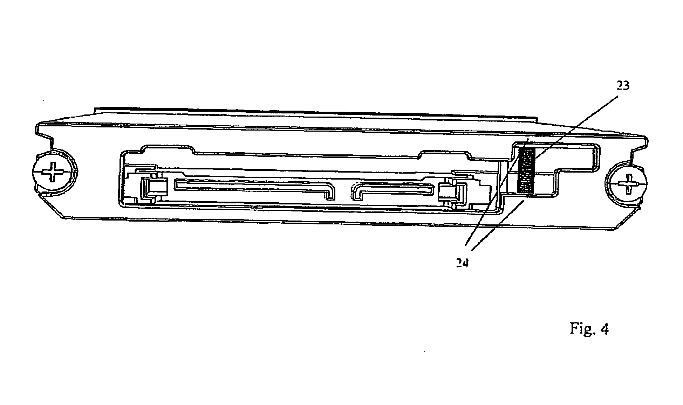

Zur Verdeutlichung, an welchen Stellen das Verriegelungselement 23 am Datenspeicher 20 bei gewaltsamer Entfernung aus einer Aufnahmeeinrichtung 10 zerstört werden würde, sind in Figur 4 die Sollbruchstellen 24 angedeutet. Das heißt, dass bei Einwirkung einer Zugkraft oder eines Biegemomentes auf Grund gewaltsamer Entfernung des Datenspeichers 20 aus einer Aufnahmeeinrichtung 10 das Verriegelungselement 23 im Wesentlichen an den beiden Punkten der Verbindung mit dem Datenspeichergehäuse brechen würde.

### Bezugszeichenliste

- 10: Aufnahmeeinrichtung
- 11: Betätigungselement
- 12: Schnittstelle
- 13: Anzeige
- 14: Verriegelungseinrichtung (Riegel)
- 15: Freigabeeinrichtung
- 16: Elektromagnet
- 17: Kondensator
- 20: Datenspeicher
- 21: Speichermedium
- 22: Gehäuse
- 23: Verriegelungselement
- 24: Sollbruchstelle
- 25: Formelement
- 30: elektronischer Schlüssel
- 31: Elektro-Energlespeicher
- 40: Bewegungsrichtung

## Patentansprüche

1. Aufnahmeeinrichtung (10) zur Aufnahme eines Datenspeichers (20), mit einer Verriegelungseinrichtung (14) zur Fixierung des Datenspeichers (20) an oder in der Aufnahmeeinrichtung (10) und mit einer Freigabeeinrichtung (15), mittels derer die Fixierungswirkung der Verriegelungseinrichtung (14) aufhebbar ist und somit der Datenspeicher (20)zur Entnahme freigebbar ist, **dadurch gekennzeichnet, dass** die Freigabeeinrichtung (15) durch wenigstens einen elektronischen Schlüssel (30) aktivierbar ist, wobei der elektronische Schlüssel (30) Träger eines Codes ist, der von der Freigabeeinrichtung (15) auslesbar ist und der elektronische Schlüssel einen Elektro-Energiespeicher (31) aufweist, so dass die elektrische Energie zur Entriegelung des Verriegelungsmechanismus durch den elektronischen Schlüssel (30) bereitgestellt ist, wobei die Aufnahmeeinrichtung (10) eine Steuerungseinrichtung umfasst, mittels derer die Freigabe des Datenspeichers (20) nach Auslesung eines im elektronischen Schlüssel (30) gespeicherten Codes steuerbar ist, wobei die Aufnahmeeinrichtung (10) derart ausgestaltet ist, dass sie bei Erhalt des Signals zur Entriegelung vom elektronischen Schlüssel (30) während des Betriebes des Datenspeichers (20) zunächst den Zugriff auf den Datenspeicher (20) beendet und danach den Datenspeicher (20) entriegelt.

2. Aufnahmeeinrichtung nach Anspruch 1, **dadurch gekennzeichnet, dass** die Aufnahmeeinrichtung (10) ein Betätigungselement (11) aufweist, welches mittels Beaufschlagung mit einer von einem Formelement (25) am Datenspeicher (20) bewirkten mechanischen Kraft betätigbar oder betätigt ist, wobei die Aufnahmeeinrichtung (10) derart ausgestaltet ist, dass eine Kommunikation zwischen dem Datenspeicher (20) und der Aufnahmeeinrichtung (10) nur möglich ist, wenn das Betätigungselement (11) betätigt ist.

3. Aufnahmeeinrichtung nach wenigstens einem der vorhergehenden Ansprüche, **dadurch gekennzeichnet, dass** die Aufnahmeeinrichtung (10) derart ausgestaltet ist, dass sie nach Entriegelung des Datenspeichers (20) diesen wenigstens 5 bis 20 mm bewegt.

4. Aufnahmeeinrichtung nach wenigstens einem der vorhergehenden Ansprüche, **dadurch gekennzeichnet, dass** die Aufnahmeeinrichtung (10) eine Anzeige (13) aufweist, auf der wenigstens der Zustand der Entnahmebereitschaft des Datenspeichers (20) aus der Aufnahmeeinrichtung (10) erkennbar ist.

5. Aufnahmeeinrichtung nach wenigstens einem der vorhergehenden Ansprüche, **dadurch gekennzeichnet, dass** die Freigabeeinrichtung (15) derart ausgestaltet ist, dass sie durch mehrere elektronische Schlüssel (30) betätigt werden kann.

6. Datenspeichersystem, umfassend eine Aufnahmeeinrichtung (10) nach wenigstens einem der Ansprüche 1 bis 5.

7. Verfahren zur Entnahme eines in oder an einer Aufnahmeeinrichtung (10) fixierten Datenspeichers (20) aus der Aufnahmeeinrichtung (10) wobei die Aufnahmeeinrichtung (10) eine Aufnahmeeinrichtung nach wenigstens einem der Ansprüche 1 bis 5 ist, wobei zur Aktivierung einer Lösung der Fixierung des Datenspeichers (20) in oder an der Aufnahmeeinrichtung (10) der Code eines elektronischen Schlüssels (30) ausgelesen wird und bei Übereinstimmung mit einer in der Aufnahmeeinrichtung (10) gespeicherten Information der Datenspeicher (20) zur Entnahme freigegeben wird, wobei eine elektrische Energie zur Entriegelung eines Verriegelungsmechanismus von dem elektronischen Schlüssel (30) bereitgestellt wird und die Freigabe des Datenspeichers (20) erst erfolgt, wenn der Betrieb des Datenspeichers (20) beendet ist.

## Claims

1. A holder device (10) for holding a data storage medium (20), with a locking device (14) for fastening the data storage medium (20) on or in the holder device (10) and with a release device (15), by means of which the fastening effect of the locking device (14) can be eliminated so that the data storage medium (20) can be released in order to be removed, **characterized in that** the release device (15) can be activated by means of at least one electronic key (30), wherein the electronic key (30) carries a code that can be read out by the release device (15) and the electronic key has an electric-energy storage device (31) so that the electric energy for unlocking the locking mechanism is provided by the electronic key (30), wherein the holder device (10) comprises a control device, by means of which the release of the data storage medium (20) after reading-out a code stored in the electronic key (30) can be controlled, wherein the holder device (10) is designed such that it, upon receiving the signal for unlocking from the electronic key (30) during the operation of the data storage medium (20), first terminates the access to the data storage medium (20) and unlocks the data storage medium (20) thereafter.

2. A holder device according to claim 1, **characterized in that** the holder device (10) has an actuating member (11) that can be or is actuated by means of applying a mechanical force caused by a molded member (25) on the data storage medium (20), wherein the holder device (10) is designed such that communication between the data storage medium (20) and the holder device (10) is only possible when the actuating member (11) is actuated.

3. A holder device according to at least one of the preceding claims, **characterized in that** the holder device (10) is designed such that it moves the data storage medium (20) by at least 5 to 20 mm after the unlocking of the data storage medium (20).

4. A holder device according to at least one of the preceding claims, **characterized in that** the holder device (10) has a display device (13), on which at least the state of readiness of the data storage medium (20) for being removed from the holder device (10) is indicated.

5. A holder device according to at least one of the preceding claims, **characterized in that** the release device (15) is designed such that it can be actuated by several electronic keys (30).

6. A data storage system comprising a holder device (10) according to at least one of claims 1 to 5.

7. A method for removing a data storage medium (20) fastened in or on a holder device (10) from the holder device (10), wherein the holder device (10) is a holder device according to at least one of claims 1 to 5, wherein, for activating a release of the fastening of the data storage medium (20) in or on the holder device (10), the code of an electronic key (30) is read out and the data storage medium (20) is released in order to be removed if the code corresponds to a piece of information stored in the holder device (10), wherein electric energy for unlocking a locking mechanism is provided by the electronic key (30) and the data storage medium (20) is only released when the operation of the data storage medium (20) is terminated.

## Revendications

1. Dispositif de réception (10) destiné à la réception d'une mémoire (20), avec un dispositif de verrouillage (14) destiné à la fixation de la mémoire (20) sur ou dans le dispositif de réception (10) et avec un dispositif de libération (15) au moyen duquel l'action de fixation du dispositif de verrouillage (14) peut être supprimée et au moyen duquel la mémoire (20) peut ainsi être libérée pour son extraction, **caractérisé en ce que** le dispositif de libération (15) peut être activé par au moins une clé électronique (30), la clé électronique (30) étant le support d'un code qui peut être lu par le dispositif de libération (15), et la clé électronique présentant un accumulateur d'énergie électrique (31) de telle sorte que l'énergie électrique destinée au déverrouillage du mécanisme de verrouillage est fournie par la clé électronique (30), le dispositif de réception (10) comprenant un dispositif de commande au moyen duquel la libération de la mémoire (20) peut être commandée après la lecture d'un code stocké dans la clé électronique (30), le dispositif de réception (10) étant constitué de telle sorte que, lors de l'obtention du signal de déverrouillage en provenance de la clé électronique (30) pendant le fonctionnement de la mémoire (20), il met d'abord fin à l'accès à la mémoire (20) et déverrouille ensuite la mémoire (20).

2. Dispositif de réception selon la revendication 1, **caractérisé en ce que** le dispositif de réception (10) présente un élément d'actionnement (11) qui peut être actionné ou est actionné au moyen de la sollicitation avec une force mécanique mise en oeuvre par un élément de forme (25) sur la mémoire (20), le dispositif de réception (10) étant constitué de telle sorte qu'une communication entre la mémoire (20) et le dispositif de réception (10) n'est possible que si l'élément d'actionnement (11) est actionné.

3. Dispositif de réception selon au moins une des revendications précédentes, **caractérisé en ce que** le dispositif de réception (10) est constitué de telle sorte que, après le déverrouillage de la mémoire (20), il déplace cette dernière d'au moins 5 à 20 mm.

4. Dispositif de réception selon au moins une des revendications précédentes, **caractérisé en ce que** le dispositif de réception (10) présente un affichage (13) sur lequel peut être identifié au moins l'état de préparation à l'extraction de la mémoire (20) hors du dispositif de réception (10).

5. Dispositif de réception selon au moins une des revendications précédentes, **caractérisé en ce que** le dispositif de libération (15) est constitué de telle sorte qu'il peut être actionné par plusieurs clés électroniques (30).

6. Système de mémoire, comprenant un dispositif de réception (10) selon au moins une des revendications 1 à 5.

7. Procédé d'extraction, à partir du dispositif de réception (10), d'une mémoire (20) fixée dans ou sur un dispositif de réception (10), le dispositif de réception (10) étant un dispositif de réception selon au moins une des revendications 1 à 5, le code d'une clé électronique (30) étant lu pour l'activation d'un détachement de la fixation de la mémoire (20) dans ou sur le dispositif de réception (10), et la mémoire (20) étant libérée pour l'extraction en cas de coïncidence avec une information stockée dans le dispositif de réception (10), une énergie électrique destinée au déverrouillage d'un mécanisme de verrouillage étant fournie par la clé électronique (30), et la libération de la mémoire (20) n'étant effectuée que lorsque le fonctionnement de la mémoire (20) est terminé.
